# EUROPÄISCHE PATENTANMELDUNG

(11) **EP 2 375 275 A2**
(43) Veröffentlichungstag der Anmeldung: **12.10.2011**
(21) Anmeldenummer: 11002455.1
(22) Anmeldetag: 24.03.2011
(51) Int. Cl.: G02B 27/22, G03B 35/02, H04N 13/00

(54) **Stereo-Objektiv**

(30) Priorität: 31.03.2010 DE 102010013528
(71) Anmelder: Arnold & Richter Cine Technik GmbH & Co. Betriebs KG, 80799 München (DE)
(72) Erfinder: Cieslinski, Michael, 85521 Ottobrunn (DE); Popp, Hermann, 81547 München (DE)
(74) Vertreter: Manitz, Finsterwald & Partner GbR

(57) **Zusammenfassung**

Ein Stereo-Objektiv für eine Kamera umfasst eine erste Empfangsoptik, die einen ersten Strahlengang entlang einer ersten optischen Achse leitet, ferner eine zweite Empfangsoptik, die einen zweiten Strahlengang entlang einer zweiten optischen Achse leitet, wobei die erste optische Achse und die zweite optische Achse parallel zueinander verlaufen oder sich kreuzen. Das Objekt umfasst außerdem einen Vereinigungsabschnitt, der den ersten Strahlengang und den zweiten Strahlengang vereinigt, und eine Ausgangsoptik, die den vereinigten ersten und zweiten Strahlengang entlang einer gemeinsamen optischen Achse leitet, wobei der erste Strahlengang und der zweite Strahlengang innerhalb der Ausgangsoptik räumlich zusammenfallen.

## Beschreibung

Die Erfindung betrifft ein Stereo-Objektiv für eine Kamera, insbesondere für eine elektronische Bewegtbildkamera oder für eine herkömmliche Filmkamera.

Kinofilme werden in zunehmendem Maße für eine dreidimensionale (3D) Projektion produziert. Hierfür ist es notwendig, zwei kontinuierliche Bildsequenzen von zwei verschiedenen, horizontal zueinander versetzten Positionen aus aufzunehmen. Typischerweise entspricht hierbei der Pupillenabstand der beiden Aufnahmepositionen ungefähr dem Augenabstand des Menschen (ca. 65 mm).

Die Aufnahme der beiden Bildsequenzen erfolgt üblicherweise durch zwei Kameras, die zueinander synchronisiert sind und eine eigene jeweilige Optik und einen eigenen jeweiligen Bildsensor oder jeweilige Filmbühne und Filmtransporteinrichtung besitzen. Die beiden Kameras werden an einer gemeinsamen Halterung montiert. Da die Kameras und Objektive jedoch typischerweise wesentlich breiter sind als erwünschte Pupillenabstand, nämlich beispielsweise 160 mm, müssen zusätzlich Spiegel in den jeweiligen Strahlengang eingefügt werden.

Das Aufnehmen von 3D-Filmen mit zwei im Wesentlichen getrennten Kameras ist unerwünscht aufwendig. Die durch die beiden Kameras gebildete 3D-Aufnahmeeinrichtung ist sperrig und schwer. Ferner bereitet es Schwierigkeiten, zwei exakt gleiche Objektive zu finden, damit sichergestellt ist, dass die beiden parallel aufgenommenen Bildsequenzen identische Bildeigenschaften besitzen. Daher werden üblicherweise zwei möglichst gleiche Objektive aus einer Vielzahl von Objektiven der gleichen Bauart ausgewählt.

Es ist eine Aufgabe der Erfindung, das Aufnehmen von 3D-Filmen zu vereinfachen, wobei die beiden parallel aufgenommenen Bildsequenzen möglichst identische Bildeigenschaften besitzen sollen.

Diese Aufgabe wird durch ein Stereo-Objektiv gemäß Anspruch 1 gelöst, mit einer ersten Empfangsoptik, die einen ersten Strahlengang entlang einer ersten optischen Achse leitet, ferner mit einer zweiten Empfangsoptik, die einen zweiten Strahlengang entlang einer zweiten optischen Achse leitet, wobei die erste optische Achse und die zweite optische Achse parallel zueinander verlaufen oder sich kreuzen, ferner mit einem Vereinigungsabschnitt, der den ersten Strahlengang und den zweiten Strahlengang vereinigt, und mit einer Ausgangsoptik, die den vereinigten ersten und zweiten Strahlengang entlang einer gemeinsamen optischen Achse leitet, wobei der erste Strahlengang und der zweite Strahlengang innerhalb der Ausgangsoptik räumlich zusammenfallen.

Das Stereo-Objektiv besitzt eine erste Empfangsoptik und eine zweite Empfangsoptik, um einen ersten Strahlengang und einen zweiten Strahlengang entlang einer jeweiligen optischen Achse zu leiten. Die beiden optischen Achsen sind in dem gewünschten Abstand (beispielsweise ca. 65 mm) versetzt zueinander und verlaufen parallel zueinander oder kreuzen sich in einer gewissen Entfernung von dem Objektiv.

Das Stereo-Objektiv besitzt ferner einen Vereinigungsabschnitt, der den ersten Strahlengang und den zweiten Strahlengang vereinigt. Mit anderen Worten ist der Vereinigungsabschnitt an seiner Lichteintrittsseite mit der ersten Empfangsoptik und der zweiten Empfangsoptik gekoppelt, wobei die beiden Strahlengänge in dem Vereinigungsabschnitt zusammengeführt und an einer Lichtaustrittsseite des Vereinigungsabschnitts gemeinsam weitergeleitet werden.

Die Lichtaustrittsseite des Vereinigungsabschnitts ist mit einer Ausgangsoptik gekoppelt, die den vereinigten ersten und zweiten Strahlengang entlang einer gemeinsamen optischen Achse leitet, insbesondere zu einem Bildsensor einer elektronischen Bewegtbildkamera oder zu der Filmbühne einer herkömmlichen Filmkamera. Innerhalb der Ausgangsoptik fallen der erste Strahlengang und der zweite Strahlengang räumlich zusammen, d.h. der erste Strahlengang und der zweite Strahlengang nehmen innerhalb der Ausgangsoptik denselben Querschnitt ein.

Das Stereo-Objektiv besitzt somit die beiden erforderlichen Empfangsoptiken, um den Pupillenabstand für das Aufnehmen von 3D-Filmen zu realisieren. Die beiden hierdurch definierten Strahlengänge werden jedoch in einem Vereinigungsabschnitt miteinander vereinigt, sodass eine gemeinsame Ausgangsoptik verwendet werden kann. Innerhalb der Ausgangsoptik fallen der erste Strahlengang und der zweite Strahlengang räumlich zusammen, sodass die Ausgangsoptik für beide Strahlengänge identisch wirksam ist. Somit muss lediglich sichergestellt werden, dass die beiden Empfangsoptiken identische optische Eigenschaften besitzen. Bei den beiden Empfangsoptiken kann es sich allerdings um vergleichsweise einfache Linsen oder Linsengruppen handeln, insbesondere mit fester Brennweite und Apertur, d.h. ohne bewegliche Elemente. Die optischen Eigenschaften der Ausgangsoptik beeinflussen die beiden Strahlengänge hingegen ohnehin in identischer Weise.

Durch die Verwendung eines derartigen Stereo-Objektivs mit einer gemeinsamen Ausgangsoptik für die beiden Strahlengänge wird anstelle von zwei getrennten Kameras und Objektiven lediglich eine einzige Kamera mit einem speziellen Objektiv benötigt.

Vorzugsweise umfasst die Ausgangsoptik wenigstens ein optisches Element mit einer variablen optischen Eigenschaft, wobei auch dieses optische Element für den ersten Strahlengang und den zweiten Strahlengang gemeinsam wirksam ist. Hierdurch ist sichergestellt, dass auch das optische Element mit seiner variablen optischen Eigenschaft für beide Strahlengänge in identischer Weise wirksam ist, ohne dass es zu Unterschieden bei den beiden parallel aufgenommenen Bildsequenzen kommt. Beispielsweise kann das genannte optische Element eine Irisblende (mit variabler Apertur, d.h. mit variabler freier Öffnung), eine Fokussiereinrichtung und/oder eine Brennweiteneinstelleinrichtung (Zoom) umfassen. Insbesondere eine auf beide Strahlengänge identisch wirkende Fokussiereinrichtung umgeht das Problem, das ein Objektiv beim Scharfstellen oftmals auch eine geringfügige Seitwärtsbewegung ausführt, was sich bei zwei separaten Fokussiereinrichtungen für die beiden Strahlengänge als sehr störend erweisen würde.

Weiterhin ist es bevorzugt, wenn dem ersten Strahlengang ein erster Verschluss (so genannter Shutter) zugeordnet ist, um den ersten Strahlengang wahlweise zu sperren oder freizugeben, und wenn dem zweiten Strahleneingang ein zweiter Verschluss zugeordnet ist, um den zweiten Strahlengang wahlweise zu sperren oder freizugeben, wobei eine Steuereinrichtung vorgesehen ist, um den ersten Verschluss und den zweiten Verschluss alternierend zu betätigen. Durch die beiden alternierend betätigten Verschlüsse können der erste Strahlengang und der zweite Strahlengang alternierend gesperrt werden. Hierdurch werden die Bilder der beiden parallel aufgenommenen Bildsequenzen also im Zeitmultiplex auf den Bildsensor oder den Film der angeschlossenen Kamera projiziert. Somit kann die Kamera alternierend ein Bild des ersten Strahlengangs und ein Bild des zweiten Strahlengangs aufnehmen, ohne dass es sich als störend erweist, dass die beiden Strahlengänge nach ihrer Zusammenführung innerhalb der Ausgangsoptik räumlich zusammenfallen.

Das alternierende Aufnehmen eines jeweiligen Bildes der einen Bildsequenz und der anderen Bildsequenz vereinfacht auch die spätere Wiedergabe. Bei der Projektion von 3D-Filmen wird die jeweilige Bildinformation für das rechte Auge und das linke Auge nämlich oftmals zeitlich nacheinander gezeigt. Hierfür ist im Falle von gleichzeitig aufgenommenen Bildern der beiden Bildsequenzen ein unerwünscht aufwendiges Umrechnen der Bildinformation (unter Berücksichtigung des jeweils zuvor oder danach aufgenommmenen Bildes) erforderlich. Dieser Umrechnungsaufwand kann entfallen, wenn die Bilder der beiden Bildsequenzen ohnehin zeitlich versetzt zueinander aufgenommen werden.

Vorzugsweise ist der erste Verschluss zwischen der ersten Empfangsoptik und dem Vereinigungsabschnitt des Stereo-Objektivs angeordnet, und in entsprechender Weise ist der zweite Verschluss zwischen der zweiten Empfangsoptik und dem Vereinigungsabschnitt angeordnet. Hierdurch ergibt sich eine besonders einfache Anordnung der beiden Verschlüsse. Es ist jedoch auch möglich, die beiden Verschlüsse innerhalb der jeweiligen Empfangsoptik oder innerhalb des Vereinigungsabschnitts anzuordnen.

Die beiden Verschlüsse können durch einen gemeinsamen mechanischen Verschluss gebildet sein, der abwechselnd den ersten und den zweiten Strahlengang sperrt bzw. freigibt.

Vorzugsweise umfassen der erste Verschluss und der zweite Verschluss jedoch einen jeweiligen Flüssigkristallverschluss (so genannter LCD Shutter). Dieser besitzt zwei um 90° zueinander verdrehte Linearpolarisationsfilter, zwischen denen die Polarisationsrichtung des einfallenden Lichts wahlweise beibehalten wird (um den jeweiligen Strahlengang zu sperren) oder um 90° gedreht wird (um den jeweiligen Strahlengang freizugeben). Ein derartiger Flüssigkristallverschluss ist sehr einfach und schnell elektronisch ansteuerbar.

Sofern die an der jeweiligen Eintrittsseite der beiden Flüssigkristallverschlüsse vorgesehenen Linearpolarisationsfilter (für die verschiedenen Strahlengänge) nicht in derselben Richtung wirksam sind, ist es bevorzugt, wenn vor dem jeweiligen Flüssigkristallverschluss ein jeweiliger Zirkularpolarisationsfilter oder eine Entpolarisationseinrichtung vorgesehen ist. Dies ist insbesondere dann von Vorteil, wenn das in das Stereo-Objektiv einfallende Licht keine zufällige Verteilung der Polarisationsrichtung besitzt, sondern mehr oder weniger linear polarisiert ist, wie dies beispielsweise bei Licht der Fall ist, das schräg auf eine Wasseroberfläche fällt und von dieser reflektiert wird. In einem solchen Fall ist sichergestellt, dass aufgrund der in unterschiedlichen Richtungen wirksamen Linearpolarisationsfilter nicht unterschiedliche Lichtmengen herausgefiltert werden, wodurch die beiden parallel aufgenommenen Bildsequenzen unterschiedlich hell erscheinen würden.

Was den genannten Vereinigungsabschnitt des Stereo-Objektivs betrifft, so kann dieser einen polarisationsabhängig wirksamen Strahlteiler aufweisen (z.B. Spiegel oder Strahlteilerschicht eines Prismenstrahlteilerwürfels). Vorzugsweise ist vor dem Strahlteiler ein erster Linearpolarisationsfilter vorgesehen, der den ersten Strahlengang in einer ersten Richtung linear polarisiert, wobei vor dem Strahlteiler auch ein zweiter Linearpolarisationsfilter vorgesehen ist, der den zweiten Strahlengang in einer zweiten Richtung linear polarisiert, welche zu der genannten ersten Richtung um 90° verdreht ist. Der polarisationsabhängig wirksame Strahlteiler reflektiert das in der ersten Richtung polarisierte Licht, während er für das in der zweiten Richtung polarisierte Licht durchlässig ist. Hierdurch werden Verluste und gegenseitige optische Störungen der beiden Strahlengänge in dem Vereinigungsabschnitt wirksam vermieden. Die beiden Linearpolarisationsfilter können insbesondere durch jene Linearpolarisationsfilter gebildet sein, welche bei den vorgenannten Flüssigkristallverschlüssen ohnehin vorgesehen sind.

Auch bei dieser Ausführungsform ist es bevorzugt, wenn vor dem Strahlteiler für den ersten Strahlengang und dem zweiten Strahlengang ein jeweiliger Zirkularpolarisationsfilter oder eine jeweilige Entpolarisationseinrichtung vorgesehen ist. Da dem Strahlteiler Linearpolarisationsfilter vorgeschaltet sind, die in unterschiedlichen Richtungen wirksam sind, wird somit vermieden, dass für den ersten Strahlengang und den zweiten Strahlengang unterschiedliche Lichtmengen ausgegeben werden, falls das einfallende Licht keine zufällige Verteilung der Polarisation besitzt, sondern mehr oder weniger linear polarisiert ist, wie vorsteht erläutert.

Ferner ist es von Vorteil, wenn vor dem Strahlteiler eine erste Strahlquerschnittsbegrenzungseinrichtung vorgesehen ist, die den Querschnitt des ersten Strahlengangs begrenzt, und wenn vor dem Strahlteiler auch eine zweite Strahlquerschnittbegrenzungseinrichtung vorgesehen ist, die den Querschnitt des zweiten Strahlengangs begrenzt. Diese Strahlquerschnittbegrenzungseinrichtungen können in den Empfangsoptiken oder in dem Vereinigungsabschnitt des Stereo-Objektivs angeordnet sein. Die jeweilige Strahlquerschnittbegrenzungseinrichtung kann beispielsweise durch eine Blende mit fester Apertur oder durch einen feststehenden Teil der Empfangsoptik gebildet sein. Die jeweilige Strahlquerschnittsbegrenzungseinrichtung schnürt das betreffende Strahlbündel ein und trägt somit dazu bei, die Abmessungen des Strahlteilers zu begrenzen.

Weiterhin ist es bevorzugt, wenn der erste Strahlengang und der zweite Strahlengang innerhalb des Vereinigungsabschnitts dieselbe optische Weglänge zurücklegen. Auch dies trägt dazu bei, dass die Ausgangsoptik auf die beiden Strahlengänge in gleicher Weise wirksam ist.

Gemäß einer besonders vorteilhaften Ausführungsform vereinigt der Vereinigungsabschnitt des Stereo-Objektivs den ersten Strahlengang und den zweiten Strahlengang derart, dass sowohl der erste Strahlengang als auch der zweite Strahlengang sich innerhalb der Ausgangsoptik über die volle Apertur, d.h. über die gesamte zur Verfügung stehende freie Öffnung der Ausgangsoptik erstrecken. Hierdurch wird insbesondere vermieden, dass ein im Objektraum außerhalb der Fokuslage befindlicher Punkt in der Bildebene (d.h. in der Ebene des Bildsensors oder des Films) nicht als Kreis, sondern lediglich als Halbkreis erscheint. Letzteres kann beispielsweise der Fall sein, wenn der erste Strahlengang lediglich entlang einer Hälfte der Ausgangsoptik und der zweite Strahlengang lediglich entlang der anderen Hälfte der Ausgangsoptik geführt werden.

Hierzu ist es bevorzugt, wenn der Vereinigungsabschnitt des Stereo-Objektivs einen Strahlteiler aufweist, der sich - entlang der optischen Achse der Ausgangsoptik betrachtet - über die volle Apertur der Ausgangsoptik erstreckt.

Beispielsweise kann der Vereinigungsabschnitt des Stereo-Objektivs für den ersten Strahlengang und den zweiten Strahlengang einen Prismenstrahlteilerwürfel mit einer Strahlteilerschicht aufweisen, die bezüglich der optischen Achse der Ausgangsoptik in einem Winkel von ca. 45° ausgerichtet ist und die sich - entlang der optischen Achse der Ausgangsoptik betrachtet - über die volle Apertur der Ausgangsoptik erstreckt. Bei dieser Ausführungsform ist es bevorzugt, dass der Vereinigungsabschnitt für den ersten Strahlengang einen der ersten Empfangsoptik nachgeordneten Lichtleiterwürfel und ein Umlenkprisma mit einer Spiegelschicht aufweist, die bezüglich der ersten optischen Achse des Stereo-Objektivs in einem Winkel von ca. 45° und im Wesentlichen parallel zu der Strahlteilerschicht des Prismenstrahlteilerwürfels ausgerichtet ist. Der Vereinigungsabschnitt kann dann für den zweiten Strahlengang ein erstes, der zweiten Empfangsoptik nachgeordnetes Umlenkprisma mit einer Spiegelschicht aufweisen, die bezüglich der zweiten optischen Achse des Stereo-Objektivs in einem Winkel von ca. 45° ausgerichtet ist, und ein zweites Umlenkprisma mit einer Spiegelschicht, die im Wesentlichen parallel zu der Spiegelschicht des ersten Umlenkprismas und bezüglich der Strahlteilerschicht des Prismenstrahlteilerwürfels in einem Winkel von ca. 90° ausgerichtet ist. Durch die genannten Umlenkprismen mit einer jeweiligen Spiegelschicht wird der erforderliche Versatz der ersten optischen Achse und der zweiten optischen Achse relativ zueinander und relativ zu der optischen Achse der Ausgangsoptik bewirkt. Alternativ zu der Verwendung von Prismen können jedoch auch einfache Spiegel verwendet werden.

Die Erfindung bezieht sich auch auf eine elektronische Bewegtbildkamera mit einem optoelektronischen Bildsensor und einem Stereo-Objektiv, das einen jeweiligen Verschluss für den ersten Strahlengang und den zweiten Strahlengang sowie eine zugeordnete Steuereinrichtung umfasst (wie vorstehend erläutert). Die Steuereinrichtung ist dazu ausgebildet, das alternierende Betätigen der beiden Verschlüsse mit dem Auslesen des Bildsensors derart zu synchronisieren, dass der Bildsensor alternierend ein dem ersten Strahlengang entsprechendes Empfangsbild und ein dem zweiten Strahlengang entsprechendes Empfangsbild aufnimmt. Mit anderen Worten sorgt die Steuereinrichtung dafür, dass der Bildsensor ein Bild der ersten Bildsequenz aufnimmt, wenn der erste Verschluss den ersten Strahlengang freigibt und der zweite Verschluss den zweiten Strahlengang sperrt, und dass der Bildsensor ein Bild der zweiten Bildsequenz aufnimmt, wenn der erste Verschluss den ersten Strahlengang sperrt und der zweite Verschluss den zweiten Strahlengang freigibt.

Ferner bezieht sich die Erfindung auch auf eine Filmkamera mit einer Filmtransporteinrichtung zum intermittierenden Transportieren eines Films entlang einer Filmvorschubrichtung und mit einem Stereo-Objektiv der erläuterten Art, das einen jeweiligen Verschluss für den ersten Strahlengang und den zweiten Strahlengang sowie eine zugeordnete Steuereinrichtung umfasst. Bei einer derartigen Filmkamera wird generell ein in der Bildebene des Objektivs befindlicher Abschnitt des Films belichtet. Die Steuereinrichtung ist nun dazu ausgebildet, das alternierende Betätigen des ersten Verschlusses und des zweiten Verschlusses mit dem intermittierenden Transportieren des Films derart zu synchronisieren, dass der Film entlang der Filmvorschubrichtung alternierend mit einem dem ersten Strahlengang entsprechenden Empfangsbild und mit einem dem zweiten Strahlengang entsprechenden Empfangsbild belichtet wird. Somit sorgt die Steuereinrichtung dafür, dass der Film mit einem Bild der ersten Bildsequenz belichtet wird, wenn der erste Verschluss den ersten Strahlengang freigibt und der zweite Verschluss den zweiten Strahlengang sperrt, und dass der Film mit einem Bild der zweiten Bildsequenz belichtet wird, wenn der erste Verschluss den ersten Strahlengang sperrt und der zweite Verschluss den zweiten Strahlengang freigibt.

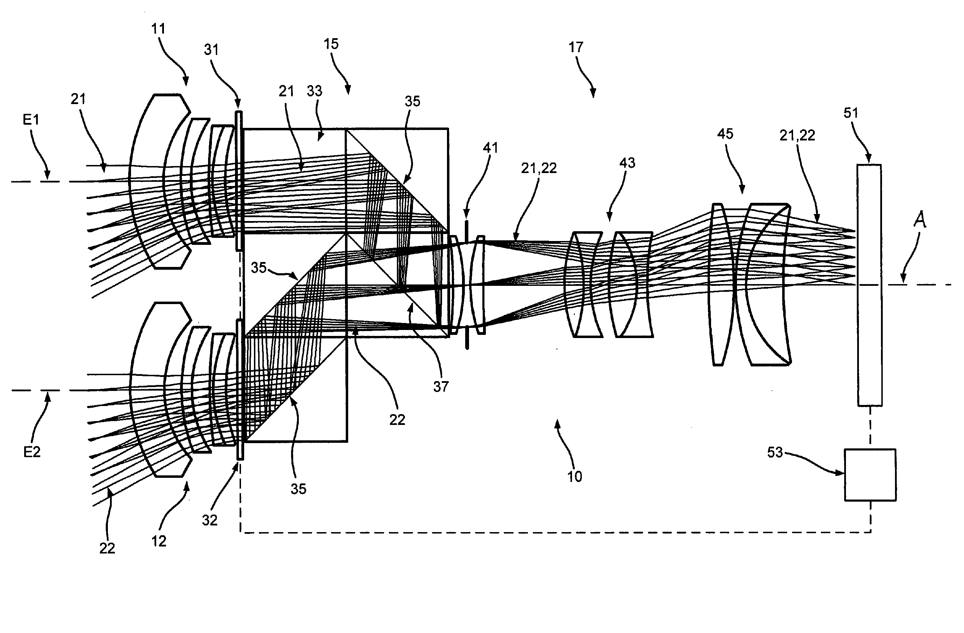

Die Erfindung wird nachfolgend lediglich beispielhaft unter Bezugnahme auf die Zeichnung erläutert. Die einzige Figur zeigt eine schematische Längsschnittansicht eines Stereo-Objektivs 10.

Das Stereo-Objektiv 10 umfasst eine erste Empfangsoptik 11, eine zweite Empfangsoptik 12, einen Vereinigungsabschnitt 15 und eine Ausgangsoptik 17.

Die erste Empfangsoptik 11 leitet einen ersten Strahlengang 21 entlang einer ersten optischen Achse E1, und die zweite Empfangsoptik 12 leitet einen zweiten Strahlengang 22 entlang einer zweiten optischen Achse E2. Die erste optische Achse E1 und die zweite optische Achse E2 verlaufen im Wesentlichen parallel versetzt zueinander. Der Abstand zwischen den beiden optischen Achsen E1 und E2 am Ort der Empfangsoptiken 11, 12 beträgt ca. 65 mm.

Zwischen der ersten Empfangsoptik 11 und dem Vereinigungsabschnitt 15 ist ein erster Verschluss 31 vorgesehen, und zwischen der zweiten Empfangsoptik 12 und dem Vereinigungsabschnitt 15 ist ein zweiter Verschluss 32 vorgesehen. Ein jeder Verschluss 31, 32 ist als ein Flüssigkristallverschluss ausgebildet, der zwei um 90° zueinander verdrehte Linearpolarisationsfilter aufweist und zwischen den beiden Linearpolarisationsfiltern die Polarisationsrichtung des einfallenden Lichts wahlweise unverändert lässt oder um 90° dreht. Die Linearpolarisationsfilter an der jeweiligen Austrittsseite der beiden Verschlüsse 31, 32 sind um 90° zueinander verdreht.

Der Vereinigungsabschnitt 15 des Stereo-Objektivs 10 umfasst mehrere Spiegel, die durch ein jeweiliges Umlenkprisma 35 gebildet sind, um den ersten Strahlengang 21 und den zweiten Strahlengang 22 zu einem Strahlteiler 37 zu leiten, wie nachfolgend noch erläutert wird. Der Strahlteiler 37 ist als ein Prismenstrahlteilerwürfel mit einer dielektrischen polarisierenden Teilerschicht ausgebildet. Der Strahlteiler 37 ist somit für das Licht der einen Polarisationsrichtung transparent, während er das Licht der anderen Polarisationsrichtung reflektiert. Beispielsweise kann der für den ersten Strahlengang 21 vorgesehene erste Verschluss 31 an seiner Austrittsseite für Licht durchlässig sein, das senkrecht zu der gezeigten Schnittebene polarisiert ist, und für diese Polarisationsrichtung ist der Strahlteiler 37 reflektierend. Der für den zweiten Strahlengang 22 vorgesehene zweite Verschluss 32 hingegen ist in diesem Fall an seiner Austrittsseite für Licht durchlässig, das innerhalb der gezeigten Schnittebene polarisiert ist, wobei der Strahlteiler 37 für diese Polarisationsrichtung durchlässig ist.

Die Teilerschicht des Strahlteilers 37 ist bezüglich der optischen Achse A der Ausgangsoptik 17 in einem Winkel von ca. 45° ausgerichtet, und sie erstreckt sich - entlang der optischen Achse A betrachtet - über die volle Apertur der Ausgangsoptik 17. Für den ersten Strahlengang 21 umfasst der Vereinigungsabschnitt 15 einen der ersten Empfangsoptik 11 nachgeordneten Lichtleiterwürfel 33 (zur Anpassung der optischen Weglänge) und ein Umlenkprisma 35 mit einer Spiegelschicht, die bezüglich der ersten optischen Achse E1 in einem Winkel von ca. 45° und im Wesentlichen parallel zu der Teilerschicht des Prismenstrahlteilerwürfels 37 ausgerichtet ist. Für den zweiten Strahlengang 22 umfasst der Vereinigungsabschnitt 15 ein erstes, der zweiten Empfangsoptik 12 nachgeordnetes Umlenkprisma 35 mit einer Spiegelschicht, die bezüglich der zweiten optischen Achse E2 in einem Winkel von ca. 45° ausgerichtet ist, und ein zweites Umlenkprisma 35 mit einer Spiegelschicht, die im Wesentlichen parallel zu der Spiegelschicht des ersten Umlenkprismas 35 und bezüglich der Teilerschicht des Prismenstrahlteilerwürfels 37 in einem Winkel von ca. 90° ausgerichtet ist.

Die Ausgangsoptik 17 umfasst mehrere Linsengruppen, die eine gemeinsame optische Achse A besitzen. Die Ausgangsoptik 17 umfasst eine Irisblende 41. Eine der genannten Linsengruppen bildet eine Fokussiereinrichtung 43, wobei eine oder mehrere Linsen entlang der optischen Achse A beweglich ist bzw. sind. Ferner bildet eine der genannten Linsengruppen der Ausgangsoptik 17 eine Brennweiteneinstelleinrichtung 45, wobei auch hier eine oder mehrere Linsen entlang der optischen Achse A beweglich ist bzw. sind. Die im Zusammenhang mit der Ausgangsoptik 17 vorhandenen Verstelleinrichtungen sind üblicher Bauart und nicht näher dargestellt.

Das gezeigte Stereo-Objektiv 10 ist beispielsweise einer elektronischen Bewegtbildkamera zugeordnet, die einen optoelektronischen Bildsensor 51 und eine elektronische Steuereinrichtung 53 umfasst.

Das Stereo-Objektiv 10 ermöglicht es, unter Verwendung einer einzigen Kamera parallel zwei Bildsequenzen aufzunehmen, die dem ersten Strahlengang 21 und dem zweiten Strahlengang 22 entsprechen. Dies geschieht durch einen Zeitmultiplex, d.h. das das Stereo-Objektiv 10 beaufschlagende Licht wird alternierend gemäß dem ersten Strahlengang 21 oder gemäß dem zweiten Strahlengang 22 zu dem Bildsensor 51 an der Austrittsseite des Objektivs 10 geleitet.

Hierfür betätigt die Steuereinrichtung 53 die beiden Verschlüsse 31, 32 abwechselnd und bewirkt synchron hierzu ein jeweiliges Aufnehmen eines Empfangsbilds durch den Bildsensor 51. Mit anderen Worten wird zu einem gegebenen Zeitpunkt der erste Verschluss 31 geöffnet, um mittels der ersten Empfangsoptik 11 und der Ausgangsoptik 17 eine Abbildung auf den Bildsensor 51 vorzunehmen, während der zweite Strahlengang 22 mittels des zweiten Verschlusses 32 unterbrochen ist. Der Bildsensor 51 nimmt hierbei ein Empfangsbild einer ersten Bildsequenz auf. Zu einem späteren Zeitpunkt ist der erste Verschluss 31 geschlossen, während der zweite Verschluss 32 geöffnet ist, sodass nun der zweite Strahlengang 22 freigegeben ist und der Bildsensor 51 ein Empfangsbild einer zweiten Bildsequenz aufnehmen kann.

Es ist zu beachten, dass die gezeigten Strahlengänge 21, 22 lediglich die optischen Abbildungsverhältnisse illustrieren. Insbesondere ist ersichtlich, dass der erste Strahlengang 21 und der zweite Strahlengang 22 mittels des Strahlteilers 37 innerhalb des Vereinigungsabschnitts 15 optisch zusammengeführt werden, d.h. an der Austrittsseite des Vereinigungsabschnitts 15 und innerhalb der Ausgangsoptik 17 fallen der erste Strahlengang 21 und der zweite Strahlengang 22 räumlich vollständig zusammen und nehmen die gesamte zur Verfügung stehende Querschnittsfläche (Apertur der Ausgangsoptik 17) in Anspruch. Während des Zeitmultiplex-Betriebs verhält es sich jedoch so, dass durch das alternierende Betätigen der beiden Verschlüsse 31, 32 innerhalb des Vereinigungsabschnitts 15 und der Ausgangsoptik 17 stets lediglich einer der beiden Strahlengänge 21, 22 freigegeben ist.

Es versteht sich, dass der Bildsensor 51 mit einer doppelten Bildaufnahmefrequenz betrieben werden muss, um insgesamt dieselbe Anzahl von Bildern aufzunehmen wie bei der Verwendung von zwei getrennten, synchron zueinander laufenden Kameras.

Anstelle für eine elektronische Bewegtbildkamera mit Bildsensor kann das Stereo-Objektiv 10 auch bei einer herkömmlichen Filmkamera zum Einsatz gelangen, um durch Zeitmultiplex den Objektraum alternierend entlang des ersten Strahlengangs 21 und entlang des zweiten Strahlengangs 22 auf den intermittierend transportierten Film abzubilden. Hierfür wird das alternierende Betätigen des ersten Verschlusses 31 und des zweiten Verschlusses 32 mit dem intermittierenden Transportieren des Films innerhalb der Filmkamera synchronisiert.

Gegenüber einer herkömmlichen Anordnung mit zwei getrennten Bewegtbildkameras ergibt sich eine erhebliche Kostenverringerung, da lediglich eine einzige Kamera benötigt wird. Auch ist die Anordnung hierdurch deutlich kleiner und leichter, was insbesondere bei Reportagen, Dokumentationen und Nachrichtensendungen von signifikanter Bedeutung ist. Vor allem können problemlos optische Elemente mit variablen optischen Eigenschaften verwendet werden, um die Bildaufnahme zu beeinflussen, ohne dass während der Aufnahme unterschiedliche Bildeigenschaften für die beiden Bildsequenzen in Erscheinung treten. Insbesondere kann während der laufenden Aufnahme die Apertur der Irisblende 41 verändert werden, oder die Fokussiereinrichtung 43 kann betätigt werden, wobei die hierdurch verursachten Änderungen der Bildeigenschaften sich in identischer Weise für beide Bildsequenzen bemerkbar machen. Es ist sogar möglich, während der laufenden Aufnahme die Brennweiteneinstelleinrichtung 45 zu betätigen, was bei herkömmlichen 3D-Kameraanordnungen wegen des mangelnden Gleichlaufs von zwei separaten Zoom-Objektiven problematisch ist. Auch hier wird ausgenutzt, dass die Ausgangsoptik 17 für die beiden Strahlengänge 21, 22 identisch wirksam ist.

### Bezugszeichenliste

- 10: Stereo-Objektiv
- 11: erste Empfangsoptik
- 12: zweite Empfangsoptik
- 15: Vereinigungsabschnitt
- 17: Ausgangsoptik
- 21: erster Strahlengang
- 22: zweiter Strahlengang
- 31: erster Verschluss
- 32: zweiter Verschluss
- 33: Lichtleiterwürfel
- 35: Umlenkprisma
- 37: Strahlteiler
- 41: Irisblende
- 43: Fokussiereinrichtung
- 45: Brennweiteneinstelleinrichtung
- 51: Bildsensor
- 53: Steuereinrichtung
- E1: optische Achse der ersten Empfangsoptik
- E2: optische Achse der zweiten Empfangsoptik
- A: optische Achse der Ausgangsoptik

## Patentansprüche

1. Stereo-Objektiv (10) für eine Kamera,
mit einer ersten Empfangsoptik (11), die einen ersten Strahlengang (21) entlang einer ersten optischen Achse (E1) leitet,
ferner mit einer zweiten Empfangsoptik (12), die einen zweiten Strahlengang (22) entlang einer zweiten optischen Achse (E2) leitet, wobei die erste optische Achse und die zweite optische Achse parallel zueinander verlaufen oder sich kreuzen,
ferner mit einem Vereinigungsabschnitt (15), der den ersten Strahlengang (21) und den zweiten Strahlengang (22) vereinigt, und
mit einer Ausgangsoptik (17), die den vereinigten ersten und zweiten Strahlengang (21, 22) entlang einer gemeinsamen optischen Achse (A) leitet, wobei der erste Strahlengang (21) und der zweite Strahlengang (22) innerhalb der Ausgangsoptik (17) räumlich zusammenfallen.

2. Stereo-Objektiv nach Anspruch 1, wobei die Ausgangsoptik (17) wenigstens ein optisches Element mit einer variablen optischen Eigenschaft aufweist, wobei das optische Element für den ersten Strahlengang (21) und den zweiten Strahlengang (22) gemeinsam wirksam ist,
wobei das optische Element insbesondere eine Irisblende (41) mit variabler Apertur, eine Fokussiereinrichtung (43) und/oder eine Brennweiteneinstelleinrichtung (45) umfasst.

3. Stereo-Objektiv nach Anspruch 1 oder 2, wobei dem ersten Strahlengang (21) ein erster Verschluss (31) zugeordnet ist, um den ersten Strahlengang wahlweise zu sperren oder freizugeben, wobei dem zweiten Strahlengang (22) ein zweiter Verschluss (32) zugeordnet ist, um den zweiten Strahlengang wahlweise zu sperren oder freizugeben, und wobei eine Steuereinrichtung (53) vorgesehen ist, um den ersten Verschluss und den zweiten Verschluss alternierend zu betätigen.

4. Stereo-Objektiv nach Anspruch 3, wobei der erste Verschluss (31) zwischen der ersten Empfangsoptik (11) und dem Vereinigungsabschnitt (15) angeordnet ist, und wobei der zweite Verschluss (32) zwischen der zweiten Empfangsoptik (12) und dem Vereinigungsabschnitt (15) angeordnet ist.

5. Stereo-Objektiv nach Anspruch 3 oder 4, wobei der erste Verschluss (31) und der zweite Verschluss (32) einen jeweiligen Flüssigkristallverschluss aufweisen, der zwei um 90° zueinander verdrehte Linearpolarisationsfilter aufweist und der zwischen den beiden Filtern die Polarisationsrichtung des Lichts wahlweise beibehält oder um 90° dreht.

6. Stereo-Objektiv nach Anspruch 5, wobei vor dem jeweiligen Flüssigkristallverschluss ein jeweiliger Zirkularpolarisationsfilter oder eine jeweilige Entpolarisationseinrichtung vorgesehen ist.

7. Stereo-Objektiv nach einem der vorhergehenden Ansprüche, wobei der Vereinigungsabschnitt (15) einen polarisationsabhängig wirksamen Strahlteiler (37) aufweist, wobei vor dem Strahlteiler ein erster Linearpolarisationsfilter vorgesehen ist, der den ersten Strahlengang (21) in einer ersten Richtung linear polarisiert, wobei vor dem Strahlteiler ein zweiter Linearpolarisationsfilter vorgesehen ist, der den zweiten Strahlengang (22) in einer zu der ersten Richtung um 90° verdrehten zweiten Richtung linear polarisiert, und wobei der Strahlteiler (37) in der ersten Richtung polarisiertes Licht reflektiert und für in der zweiten Richtung polarisiertes Licht durchlässig ist.

8. Stereo-Objektiv nach Anspruch 7, wobei vor dem Strahlteiler (37) für den ersten Strahlengang (21) und den zweiten Strahlengang (22) ein jeweiliger Zirkularpolarisationsfilter oder eine jeweilige Entpolarisationseinrichtung vorgesehen ist.

9. Stereo-Objektiv nach Anspruch 7 oder 8, wobei vor dem Strahlteiler (37) eine erste Strahlquerschnittbegrenzungseinrichtung vorgesehen ist, die den Querschnitt des ersten Strahlengangs (21) begrenzt, und wobei vor dem Strahlteiler (37) eine zweite Strahlquerschnittbegrenzungseinrichtung vorgesehen ist, die den Querschnitt des zweiten Strahlengangs (22) begrenzt.

10. Stereo-Objektiv nach einem der vorhergehenden Ansprüche, wobei der Vereinigungsabschnitt (15) den ersten Strahlengang (21) und den zweiten Strahlengang (22) derart vereinigt, dass sowohl der erste Strahlengang (21) als auch der zweite Strahlengang (22) sich innerhalb der Ausgangsoptik (17) über die volle Apertur der Ausgangsoptik (17) erstrecken.

11. Stereo-Objektiv nach einem der vorhergehenden Ansprüche, wobei der Vereinigungsabschnitt (15) einen Strahlteiler (37) aufweist, der sich - entlang der optischen Achse (A) der Ausgangsoptik (17) betrachtet - über die volle Apertur der Ausgangsoptik (17) erstreckt.

12. Stereo-Objektiv nach einem der vorhergehenden Ansprüche, wobei der Vereinigungsabschnitt (15) für den ersten Strahlengang (21) und den zweiten Strahlengang (22) einen Prismenstrahlteilerwürfel (37) mit einer Strahlteilerschicht aufweist, die bezüglich der optischen Achse (A) der Ausgangsoptik (17) in einem Winkel von 45° ausgerichtet ist und die sich - entlang der optischen Achse (A) der Ausgangsoptik (17) betrachtet - über die volle Apertur der Ausgangsoptik (17) erstreckt.

13. Stereo-Objektiv nach Anspruch 12, wobei der Vereinigungsabschnitt (15) für den ersten Strahlengang (21) einen der ersten Empfangsoptik (11) nachgeordneten Lichtleiterwürfel (33) und ein Umlenkprisma (35) mit einer Spiegelschicht aufweist, die bezüglich der ersten optischen Achse (E1) in einem Winkel von 45° und parallel zu der Strahlteilerschicht des Prismenstrahlteilerwürfels (37) ausgerichtet ist, und wobei der Vereinigungsabschnitt (15) für den zweiten Strahlengang (22) ein erstes, der zweiten Empfangsoptik (12) nachgeordnetes Umlenkprisma (35) mit einer Spiegelschicht, die bezüglich der zweiten optischen Achse (E2) in einem Winkel von 45° ausgerichtet ist, und ein zweites Umlenkprisma (35) mit einer Spiegelschicht aufweist, die parallel zu der Spiegelschicht des ersten Umlenkprismas (35) und bezüglich der Strahlteilerschicht des Prismenstrahlteilerwürfels (37) in einem Winkel von 90° ausgerichtet ist.

14. Elektronische Bewegtbildkamera mit einem Stereo-Objektiv (10) nach Anspruch 3 oder einem der auf Anspruch 3 bezogenen Ansprüche, und mit einem Bildsensor (51), wobei die Steuereinrichtung (53) dazu ausgebildet ist, das alternierende Betätigen des ersten Verschlusses (31) und des zweiten Verschlusses (32) mit dem Auslesen des Bildsensors derart zu synchronisieren, dass der Bildsensor (51) alternierend ein dem ersten Strahlengang (21) entsprechendes Empfangsbild und ein dem zweiten Strahlengang (22) entsprechendes Empfangsbild aufnimmt.

15. Filmkamera mit einem Stereo-Objektiv (10) nach Anspruch 3 oder einem der auf Anspruch 3 bezogenen Ansprüche, und mit einer Filmtransporteinrichtung zum intermittierenden Transportieren eines Films entlang einer Filmvorschubrichtung, wobei die Steuereinrichtung (53) dazu ausgebildet ist, das alternierende Betätigen des ersten Verschlusses (31) und des zweiten Verschlusses (32) mit dem intermittierenden Transportieren des Films derart zu synchronisieren, dass der Film entlang der Filmvorschubrichtung alternierend mit einem dem ersten Strahlengang (21) entsprechenden Empfangsbild und mit einem dem zweiten Strahlengang (22) entsprechenden Empfangsbild belichtet wird.
